# EUROPEAN PATENT SPECIFICATION

(11) **EP 0 930 777 B1**
(45) Date of publication and mention of the grant of the patent: **30.07.2003**
(21) Application number: 99107658.9
(22) Date of filing: 26.09.1995
(51) Int. Cl.: H04N 1/64, G06T 9/20

(54) **Image coding based on regions and segmented border lines thereof**
Bildkodierung beruhend auf Bildbereichen und deren segmentierten Randlinien
Codage d'images basé sur des régions et leurs lignes péripheriques segmentées

(30) Priority: 12.07.1995 JP 19902495
(43) Date of publication of application: 21.07.1999
(62) Divisional of application: 95115151.3
(73) Proprietor: SANYO ELECTRIC CO., LTD., Moriguchi-shi, Osaka (JP)
(72) Inventor: Suzuki, Nobuya, Kitasoma-gun, Ibaraki 300-15 (JP)
(74) Representative: Glawe, Delfs, Moll & Partner

(56) References cited:
- EP-A- 0 164 825
- EP-A- 0 301 207
- EP-A- 0 587 232
- EP-A- 0 592 029
- US-A- 4 189 711
- IEE PROCEEDINGS-I. SOLID-STATE & ELECTRON DEVICES, Vol. 140, no. 1, 1 February 1993, pages 36-45, VLACHOS T. et al.: "Graph-theoretical approach to colour picture segmentation and contour classification" XP000363791

## Description

The invention relates to a region-based image processing method and apparatus associated with coding of images or intermediate images

### DESCRIPTION OF THE PRIOR ART

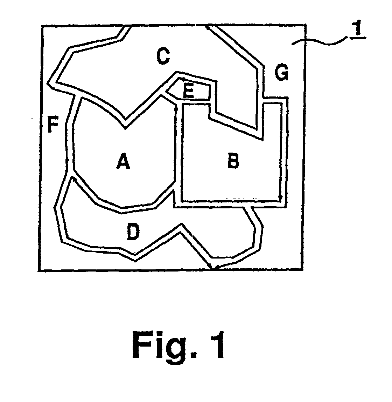

Referring to Fig. 1, there is depicted a diagram showing a method of designating image regions by a segmentation method. As shown, an original image 1 is divided into regions A to D, representative of four subjects, and their background regions E to G. The segmentation method can be, for instance, a clustering or region development method. However, it is possible to use any method.

The image is coded using a small amount of data to define the positions and the contents of the regions A to G. The definition of positions will be usually given by drawing a peripheral line of each region and by describing coordinates of pixels constituting the line. In Fig. 1, the peripheral line of each region is indicated by a line having an arrow.

### [Problems]

The above coding will enable each region to be defined as a plane by its peripheral line. The reason is that the regions and the peripheral lines are one-to-one correlated with each other, each region being described in a closed manner, without exception, by the peripheral line. However, this method has room for improvement in the following aspects.

### (1) Efficiency of Coding

Two peripheral lines are shown extending in parallel with a slight interval therebetween, allowing the boundary between the regions to be defined twice in total. This would lead to a poor coding efficiency.

A method of coding peripheral lines of image regions without coding the boundary between regions twice is disclosed in EP 0 592 029. However, the method still relies on coding peripheral lines of image regions.

EP-A-0164825 discloses an image signal encoding system in which an image is segmented into regions based on the colours of the regions.

US-A-4189711 discloses a method for coding and storing of graphical information in which on the basis of homogeneous regions and contours regions are discriminated by brightness or colours.

IEE Proceedings-I 140 (1993) pages 36 to 45 discloses an image segmentation into uniformly coloured regions on the basis of the colour distance, establishing a weighted contoured graph having classified contours in which each contour is associated with a specified significance.

### (2) Response upon Movement of Regions

If the region A moves, it is natural that the shapes and areas of the region B and other regions adjoining thereto also vary. In the case of trying to represent the movements and variations of the regions on a region basis, however, inconveniences may occur that a place hitherto covered by the thus moved region unexpectedly results in a vacant region, encountering a lack of information, or that the adjacent regions arc displaced with respect to each other or overlap each other.

### SUMMARY OF THE INVENTION

It is therefore an object of this invention to disclose a method of coding image regions without using information relating to peripheral lines. Further disclosed is an image coding apparatus utilizing a fact that this method has a strong affinity with the actual image processing hardware. Provided through such disclosure is, for instance, a technique required by MPEG4 which may be a future standard, in other words, a basic technique for coding dynamic images at lower bit rate in real time.

This object is solved by a method of processing images as defined in claim 1 and an image processing apparatus as defined in claim 10.

The image coding method of this invention is characterized in that the image regions are coded in accordance with information of border lines between regions, instead of the peripheral line information for each region.

More specifically, this method comprises, for instance, a step of scanning an image in a given direction, a step of detecting points constituting a boundary between regions and resting on the scanning lines, and a step of joining the detected border points to create a border line. In this case, "boundary between regions" represents, for instance, a boundary between the regions A and B in Fig. 1, and includes all the boundaries among the regions formed by dividing the image by any method. The dividing of the region can be performed by, e.g., color information or movement information. A method of dividing an image into units of regions having analog colors is disclosed in related patent application EP 95 115 151.3 of the same applicants, published under EP-A-0 705 027. It is to be understood that since the image can be originally constituted by region information, like an animated image, this embodiment is not necessarily intended to be applied to an image which has undergone segmentation.

An image is first scanned to find border points between regions. These border points arc then joined in sequence to create a border line. At that time, it is desirable to record which regions the original border points belong to. For instance a border line defined between the regions A and B is different from a border line defined between the regions A and C, and that the border points constituting these two border lines are not to be confused with each other.

Furthermore, it is envisaged in this invention that the border points are classified depending on the significance so that the border points having predetermined significance can represent the border line, thereby compressing the information on the border line. The significance can be determined on the basis of some features. For instance, a border point having a geometric feature on a border line (hereinafter, referred to as a "feature point") can be of greater significance. An example of the feature point is two end points of the border line. This would enable a border line to be defined by only two points, and eliminate the necessity of defining the other points on the border line, thus allowing the information to be compressed into these two points.

It is conceivable in this invention that the region may be divided on the basis of color information (color number, luminance, brightness, etc.in a color space) and that the border line may be produced by joining points at which the color information varies.
In this case, the border line information will include, for instance, positional information on the border line as well as the color information on regions lying on both sides of the border line. This color information will enable the original image region to be decoded.

It is further envisaged in this invention that the border lines may be classified in accordance with the significance so as to be able to integrate the information on the border lines having less significance. It is to be particularly noted that "integration" referred to hereat represents the compression of information with the curtailment of the actual number of border lines and that it differs from mere compression to be performed while maintaining the number of border lines. "Significance" means, for instance, a degree strongly affecting the quality of images when the images are decoded, and it is envisaged that if the border line is a straight line, the longer the border line is, the greater the significance becomes. Accordingly, integrated herein is the border line information less influential on the quality of the images.

Furthermore, in this invention the arrangement may be such that when colors of the regions lying on both sides of the border line are analogous, these regions are integrated in advance for the subsequent coding. It is to be appreciated that "integration" referred to here means compression of information with the curtailment the actual number of regions and that it differs from mere compression to be performed while maintaining the number of regions. "Colors are approximate" will represent, for instance, the state where a color difference is not more than a certain value as well as the state where within a given distance lie the relative positions in the HVC color space. Providing that for instance, the color of the region A is approximate to that of the region B in Fig. 1, the two regions will be integrated into one region A + B.

At that time, for instance, the colors of the regions lying both sides of the border line may be defined as average colors of the respective regions (or intermediate values of the pixels). Closer average colors would allow the two regions to be integrated.

According to another aspect, the colors of the regions on both sides of the border line may be judged on the basis of the colors of points resting in the vicinity of the border line. This is because even though the average colors of two regions are largely different from each other, the integration of the two regions may possibly be natural as long as the colors in the vicinity of the border line vary smoothly. The points in the vicinity of the border line may be, for instance, a plurality of representative points lying along the border line at certain intervals, and in this case, an average color (an intermediate value) of these points may be employed.

When two regions have been thus integrated, this invention may allow the integration of a plurality of border lines capable of being integrated. In the case of the above example, a border line defined between the regions A and B will first disappear. At this point of time, separately remains a border line defined between the regions A and D and a border line defined between the regions B and D, but these two border lines can be integrated to be a single border line. The thus obtained single border line might be subjected to the above-described compression by the feature points, thereby making it possible to further curtail the amount of information.

The image coding apparatus of this invention, on the other hand, comprises means for the input of images; means for scanning the input images in a predetermined direction; means for detecting border points of image regions on the scanning line; and means for generating border lines by joining the detected border points. Images received by the receiver, e.g., will be scanned in the order of reception, whereby border points will be found e.g.,for each line. Afterwards, these border points are joined together to create border lines. In response to the border line information thus created, the region information of the image will be coded.
Fig. 1 is a diagram showing a method of specifying image regions by a segmentation method;
Fig. 2 is a diagram showing color numbers of pixels lying on lines L1 to L3 of an input image;
Fig. 3 illustrates the state with no processing, among diagrams showing processing by respective ranks of a second embodiment;
Fig. 4 illustrates the result of rank 0 processing of the second embodiment;
Fig. 5 illustrates the result of rank 1 processing of the second embodiment;
Fig. 6 illustrates the result of rank 2 processing of the second embodiment;
Fig. 7 illustrates the result of rank 3 processing of the second embodiment;
Fig. 8 is a diagram showing a relationship between preliminary integration of regions and the rank processing;
Fig. 9 is a diagram showing the ranks of border lines and the state of integration, in which a plurality of border lines HI, IJ, etc., are joined together to generally present a zigzag line;
Fig. 10 is a diagram showing the ranks of the border lines and the state of integration, particularly depicting the state after the integration of the border lines of rank Y;
Fig. 11 is a diagram depicting the state of an decoded image in the case of deletion of information on the border line NO;
Fig. 12 is a diagram depicting a schematic configuration of an apparatus of a fourth embodiment;
Fig. 13 is a view of a halftone image appearing on a display, showing the result of coding by an image coding method of the fourth embodiment; and
Fig. 14 is a view of a halftone image appearing on the display, showing the result of coding by the image coding method of the fourth embodiment.

### DESCRIPTION OF THE PREFERRED EMBODIMENTS

### Embodiment 1

This image coding method works well on images which have undergone segmentation to some extent. The object is, by way of example, the final image or intermediate image obtained by the method disclosed in said aforementioned patent application EP 95 115 151. Fig. 1 depicts an image thus obtained, for instance. Description will be given of a processing procedure for this image (referred to as "input image") hereinbelow.

### [1] Scanning

Input data arc scanned in a given direction. "A given direction" includes horizontal, vertical, or any other direction. In this case, on the assumption that image data arc input serially in line units, it would be a horizontal direction. The scanning of the input data in the order in which the data have been input would simplify the hardware configuration. which will in turn provide a greater total throughput. Since the input images have already been described by color numbers, the color numbers are read in sequence from the beginning in line units, and are then traced by software.

### [2] Detection of Border Points

A pixel is detected whose color number varies, the pixel being defined as a border point. It will depend on the software design as to which pixel, i.e., immediately before or immediately after the variation, should be regarded as the border point.

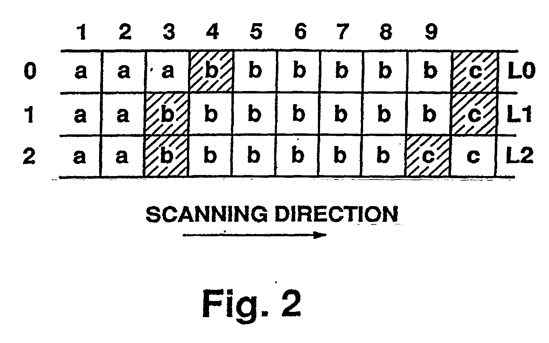

Referring to Fig. 2 there are depicted color numbers of pixels belonging to lines L0 to L2 of the input image. These pixels each carry a color number a, b, or c. In this case, the border points are pixels lying immediately after the variation which are hatched. Supposing that coordinates of a pixel are generally represented in the form of (line, column), the border points will be written as (0, 4), (1, 3), etc.

### [3] Generation of Border Lines

Border lines are generated by joining the thus detected border points in sequence. As can be seen from Fig. 2, two border lines are generated, that is,
a border line BL1 containing (0, 4), (1, 3), (2, 3), and
a border line BL2 containing (0, 10), (1, 10), (2, 9). At that time, consideration is required to avoid any confusion of the border points which belong to a different border line. Attention should be paid to the following two points.

### 1. Variations of Color Numbers

At BL1 the color numbers vary from a to b. Conversely, if a change other than this occurs, this border point will not belong to BL1, and hence is not allowed to be associated with BL1.

### 2. Mutual Positions of Border Points

Should a border point inducing the variation from a to b exist, the border point must be rejected unless it is located at a position capable of constituting BL1. More specifically, the border points may be considered to belong to the same border line only when the columns containing the border points are coincident with each other or sufficiently close to each other in the adjacent lines. In Fig. 2 the difference in column between (0, 4) and (1, 3) is merely 1, and (1, 3) and (2, 3) reside on the same column. In view of the noise or the like of the input images, these border points could be considered to be contained in the same border line only when the difference is not more than 3, for instance.

### [4] Coding of Image Information

At the time when each border line has become defined, border line information will be employed as image coding information. A format of the information can be given, for instance, as follows.

| Border Line | Constituent Border Points | Variation of Color Number |
|---|---|---|
| BL1 | (0,4), (1,3), (2,3) | a, b |
| BL2 | (0,10),(1,10),(2,9) | b, c |

One border line can be represented by coordinates of border points constituting the border line (hereinafter, referred to as "constituent border points") and two color numbers which vary on the border line (aligned in the scanning direction). It is to be noted that the BL1 may be defined, c.g., by a chain code with the start point (0, 4). This is a method in which the direction of the following point when viewed from a certain point is numerically represented.

For instance, if

| | | | |
|---|---|---|---|
| upper left : 1, | left : 2, | lower left : 3, | bottom : 4 |
| lower right: 5, | right: 6, | upper right: 7, | top : 8 |

arc specified, then BL1 will be chain coded starting from (0, 4) toward (3, 4...).

The above is an outline of the first embodiment. According to this embodiment, a double definition of the boundary portion, which may be a problem in coding using the conventional peripheral line information, will be eliminated. Also, since the region movement is represented in the form of the border line movement, it would be impossible in principle to allow the occurrence of a vacant region among the regions or of displacement or overlap between the regions.

It is envisaged that this embodiment allows the following application or modification.

### (1) Image Configuration

Although a case has been hitherto described in which the input image has undergone region division in advance, this embodiment would be effective irrespective of the division, if images originally composed of region information, such as animated images, are envisaged.

### (2) Mode of Image Input

Although it is assumed herein that the input of each pixel is executed after the transformation into the color number, the original image might be input intact. In this case, an optical scanner could be used for scanning of the original image and to acquire boundary information mainly associated with the color information.

### (3) Mode of Pixel Representation

Each pixel might bc represented by attributes other than the color number. Luminance, brightness and the like would be available.

### (4) Preliminary Integration of Regions

With the closer color numbers imparted to the regions lying on both sides of the border line, these regions might be integrated before coding. In the case of Fig. 2, if the value of |a - b | lies within a predetermined range, namely, if the color difference is small, these regions might be integrated and the color numbers of all the pixels within the region. might be substituted by a, b, or | a - b | /2. Subsequent generation of the border line would no longer allow the appearance of the border line BL1, which will contribute to an enhanced coding efficiency.

### Embodiment 2

In the second embodiment, the border line information obtained in the first embodiment is further compressed. Although in the first embodiment the border line has been described by all the constituent border points, in the second embodiment feature points arc selected from among these border points for classification, so that the border line is represented by only the feature points required. The feature points can be:
(0) both terminal ends of a line segment contained in the border line and having a length less than a predetermined value;
(1) both terminal ends of a line segment contained in the border line and having a length exceeding the predetermined value;
(2) points on which the sign of gradient of the border line changes; and
(3) both terminal ends of the border line.
Defined by this classification are four ranks of processing as follows.
[Rank 0] The border line is described by all of the feature points given by the above (0) to (3);
[Rank 1] The border line is described by the feature points given by the above (1) to (3);
[Rank 2] The border line is described by the feature points given by the above (2) and (3): and
[Rank 3] The border line is described by only the feature points given by the above (3).

The degree of compression will be increased in the descending order of rank.

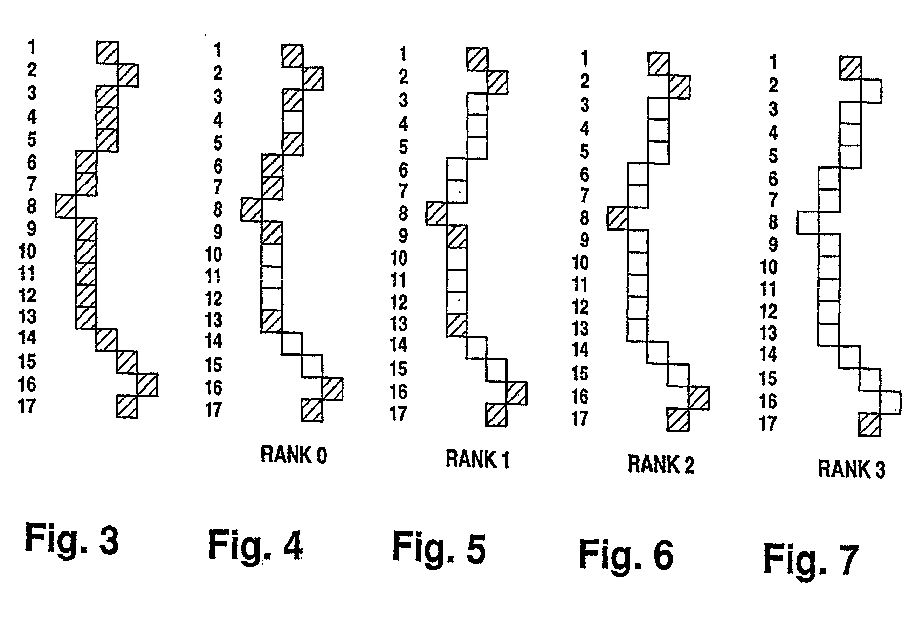

Referring to Figs. 3 to 7, processing executed by respective ranks is illustrated, Fig. 3 showing the case of no rank processing, and Fig. 4 to 7 each showing the case of processing of rank 0 or below. In the diagrams, pixels are represented by squares, with a series of pixel numbers given in the margin for the explanation. Hatched pixels designate pixels which will remain after respective processing. Each rank processing will be described in the ascending order of rank.

### [Rank 3]

As is apparent from Fig. 7, only pixels 1 and 17 only remain. The border line information is represented by the coordinates of the two pixels and the color numbers of the two regions associated respectively with the two pixels. Decoding this would allow the border line to result in a straight line joining the two terminal ends.

### [Rank 2]

As shown in Fig. 6, pixels 2, 8, and 16 also remain. The gradient of the border line is defined hereat to be 0 for a vertical direction in the diagram, positive for a rightwardly ascending direction, and negative for a rightwardly descending direction. The gradient between the images 1 and 2 is negative, and the gradient between the images 2 and 3 is positive, with the result that the pixel 2 will be a point to be found. The same applies to the pixels 8 and 16. Decoding this would allow the border line to result in a line with turns joining, in sequence, the pixels 1, 2, 8, 16 and 17 in the mentioned order. It is to be noted that the definition of the gradient is not limited to this example. Depending on the image to be processed, a convenient direction could be defined as the gradient 0.

### [Rank 1]

Let a predetermined length be four pixels. As is clear from Fig. 5, due to the presence of five pixels for the pixels 9 to 13, and four pixels at an angle of 45 degrees for the pixels 13 to 16, the pixels 9 and 13 will additionally remain. The pixel 13 is located at an intersection of the two line segments and hence is selected twice. The pixel 16 will be selected twice, in the ranks 2 and 1, respectively.

### [Rank 0]

As can be seen from Fig. 4, both the terminal ends of two remaining line segments, that is, the pixels 3, 5, 6, and 7 will additionally remain.

The use of rank 3 would allow the original 17-pixel information to be represented by only two pixels, and hence would increase the compression rate. The rank can be determined in view of the balance between the compression rate and the quality of images obtained upon decoding. In principle, it is convenient to extract a long straight line segment to allow a high compression rate. For instance, the pixels 4 to 8 in Fig. 3 have a regularity that for every descent of two pixels, a leftward shift of one pixel occurs, which could be regarded as a straight line. It is to be appreciated that the direction of the straight line need not be limited to vertical, horizontal, or slanting at 45-degrees, and that the width to be regarded as a straight line could also be sufficiently larger than the width of one pixel. It is envisaged that in any case, line segments are also considerably characteristic portions in the original image, and hence it would be significant to perform a compression of information while paying attention to those portions.

The foregoing is the compression of the border line information using the second embodiment. It is to be noted in this embodiment that it would be necessary to take into consideration the influence of the preliminary integration of the regions, which has been described in the first embodiment.

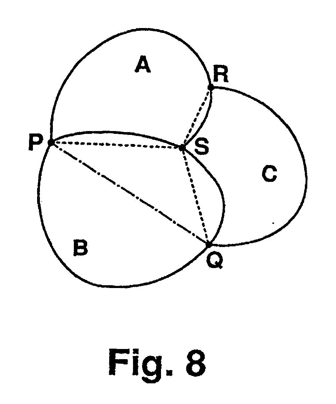

Referring to Fig. 8, there is depicted a relationship between the preliminary region integration and the rank processing. Three regions A, B and C are contained in Fig. 8 in which, using border points P to S, border lines between the regions A and B, B and C, and C and A are respectively represented as curved lines PS, QS and RS. Under such a condition, the execution of the processing of, e.g., the rank 3 would allow the respective border lines to result in broken lines PS, QS and RS.

Assuming that the regions A and C have been preliminarily integrated together, the border lines will be allowed to remain only between a region (A + C) and the region B, resulting in curves PS and SQ. At this point in time, there is no need to leave two border lines between the region (A + C) and the region B, so that the two border lines are integrated into a single fresh border line, that is, a curve PSQ. Subsequent execution of the rank 3 processing would allow the border line to result in a dot and dash line PQ as shown in Fig. 8. It is to be noted for the execution of the second embodiment that the preliminary integration of the regions would enable the border line information to be further compressed and integrated.

### Embodiment 3

The second embodiment aimed at compressing the border line information by, so to speak, ranking the individual border points. In the third embodiment, the border lines themselves arc ranked according to significance, allowing the integration of low-rank border line information. It is to be noted that this integration will entail the curtailment of the actual number of border lines, which differs from the compression performed in the second embodiment.

The third embodiment uses the length of each border line as the significance. Depending on whether the length is not less than or less than a predetermined value, the border lines are grouped into two ranks, that is, rank X for higher significance and rank Y for lower significance.

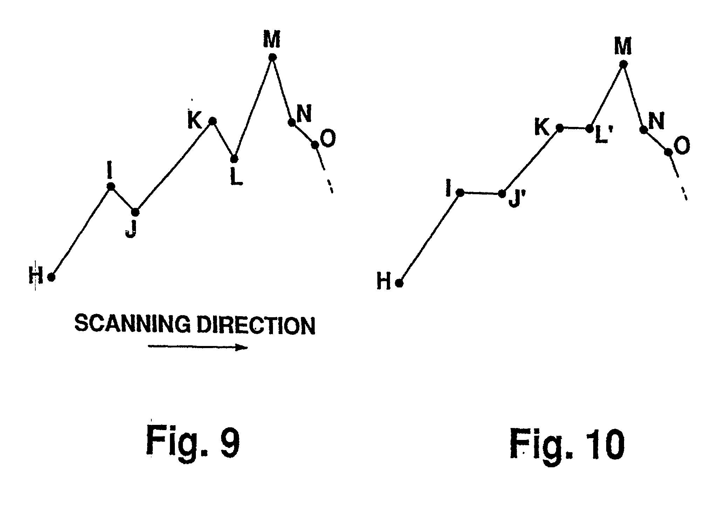

Referring to Figs. 9 and 10 the border line ranks and the state of integration are depicted. In Fig. 9, a plurality of border lines HI, IJ, etc., arc joined together so as to generally present a zigzag line. Fig. 10 illustrates the state after the integration of the border lines of the rank Y. It will be appreciated that the plurality of border lines divide the overall regions of Figs. 9 and 10 into upper and lower regions.

It is to be noted in Fig. 9 that despite the presence of only the two regions, the border lines consist of a plurality of separate border segments instead of a single continuous line extending from H to O. This is because the scanning is performed in a given direction upon the detection of the border lines, and rightwardly ascending borders (for instance, the HI portion) and rightwardly descending borders (for instance, the IJ portion) are generated as separate border lines. Now assume that IJ, KL, and NO of these border lines fall under the rank Y, with the others falling under the rank X.

### [Processing for Border Line IJ]

Now if it is intended that the rank Y information should be integrated (or deleted), the information on the border points resting on the border line IJ is deleted. Since on the contrary, the information on the border line JK should be retained, on the assumption that the information might be reutilized, it would be undesirable to simply join I to K by a line.

In this case, the information on the border line IJ is merely deleted. This would ensure that the nature of the scanning line is implicitly utilized to obtain an output which gives the appearance that the point J has moved to the point J' (the direction of the border line IJ' will coincide with the scanning direction).

The direction of the border line IJ' is coincident with the scanning direction. If the point J had existed at the position of the point J' from the beginning, this point would not hc detected as a border point as long as the border detection of this embodiment is employed. This is due to the fact that the point I is superimposed on the point J' when viewed from the scanning direction, the latter being concealed by the former. Therefore, the border line J'K could be defined as a line obtained by joining the point K to a point (designated as J") which lies on the border line J'K and is shifted by one line from the point J' towards the point K. This definition would be necessary and sufficient. The present embodiment will not need the information on the border line IJ'. Reversely, mere deletion of the information on the border line IJ would allow the point J to automatically move to the point J'. Thus, the following two effects are obtained.

### 1. No calculation step

The automatic movement of the point J to the point J' will not require a calculation step.

### 2. Compression effect by integration

This arises from the deletion of the information on the border line IJ. The representation of information using the border lines, and the nature of the scanning line, will give rise to the compression effect.

The above is the processing for the border line IJ. As a matter of fact, there are several border lines even when there arc only two regions as shown in Fig. 9, which means that it would be extremely desirable to delete the border lines.

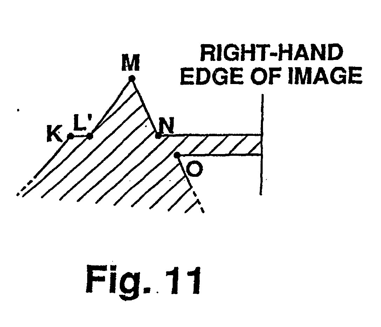

The border line KL could be subjected to the same processing, whereas the border line NO will need special consideration. The reason for this is that the point O has no point corresponding to the point J" for the point J. Fig. 11 is a view of the state of a decoded image in the case where the information on the border line NO has been deleted, which shows that mere deletion of information might give rise to problems. The removal of the border line NO will lead to the formation of two horizontal lines extending from the points N and O up to the right-hand edge of the image, consequently allowing the original region to expand into the thus newly formed region.

In order to overcome this problem, upon deleting a border line n contained in one border line BL, it will be judged in the third embodiment that the deletion is possible, if (1) when translating the border line n in the scanning direction, (2) the entire border line n again intersects with the border line BL. It is certain that the border line n satisfying such conditions, even through deleted, will allow the border line to be successfully closed at the position intersecting again with the border line BL, whereby the above problem can be overcome. In conformity with Fig. 11, this judgment method may be described as follows. When viewed horizontally leftward from the right-hand edge of the image, visible border lines, even partial ones, are not to be deleted, while it is possible to delete the other border lines.

### Embodiment 4

The first to third embodiments described hereinabove will also reveal the outline of an image coding apparatus of this embodiment.

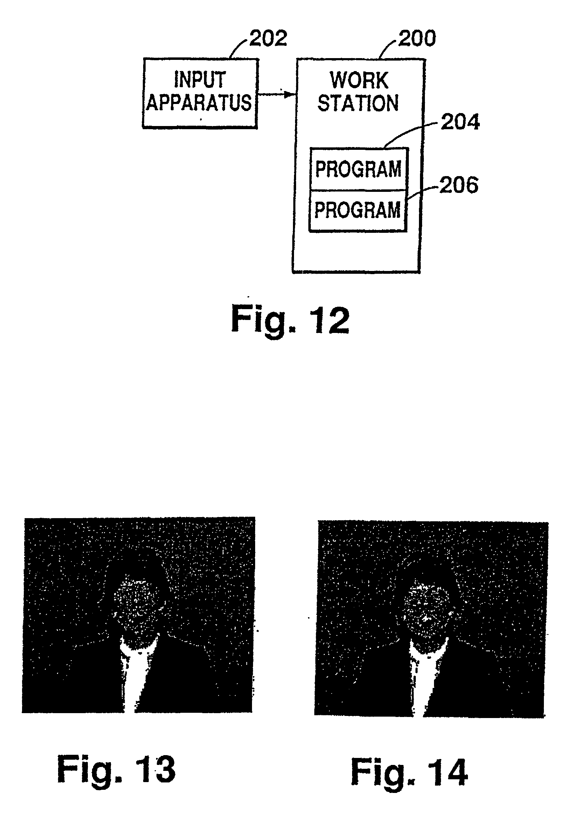

Referring to Fig. 12, illustrated a configuration of this apparatus is schematically, which comprises:
(1) a work station 200 for executing the majority of the processing;
(2) an input apparatus 202 for inputting images to be processed, the apparatus including a camera, an image reproducing apparatus, an image receiver, or a storage device in which images have already been stored;
(3) a program 204 for scanning the images input, or a scanner; and
(4) a program 206 for detecting boundaries of image regions to produce border lines. The action will be substantially the same as described in the first to third embodiments.

Referring finally to Figs. 13 and 14, there are depicted photographic images showing the results of processing according to this embodiment. Under the experimental conditions that the number of divided regions of the input image is 2000, Figs. 13 and 14 show images decoded after the processing by rank 0 and rank 3, respectively, of the second embodiments.

With the number of pixels of the original image being 21684, the number of border points which have remained as a result of the processing of the rank 0 was 9026, and the number of the remaining border points for rank 3 was 8808. As compared with the case of leaving all of the border points as information, compression of several ten percent has already been realized at the stage of rank 0. At that time, it was found that the deterioration in the quality of the image is not particularly noticeable. Naturally, the decrease in the number of divided regions will lead to an increase in the compression efficiency.

## Claims

1. A method of coding an image based on image regions (A-G), each region being associated with an attribute of the respective region (A-G), comprising the steps of:
scanning the image in a given direction;
detecting, on the scanning line, a plurality of points before or after which points the attribute changes, these points defining border points between regions (A-G); and
defining border lines by putting together substantially adjacent border points, so that the regions (A-G) are coded according to the border lines, **characterized by** :
a border line being represented by coordinates of border points constituting the border line and two numbers which represent the attributes on both sides of the border and can vary along the border line, deriving border line segment (BL1, BL2, ...) definition data along each of which segment the two attributes remain the same and
coding an image based on said regions (A-G) exclusively using the derived border line segment data.

2. A method as defined in claim 1, wherein a certain significance is given to each of the border points; and
the border points are classified according to their significance so that the border lines are represented by a plurality of border points having a predetermined significance to compress the information about the border lines.

3. A method of processing images according to claims 1 and 2, wherein the attribute is a color information so that the border lines are defined by a plurality of points at which the color information varies.

4. A method of processing images according to claim 3, wherein the information on the border lines includes:
positional information about the border lines; and
color information of regions lying on both sides of said border lines.

5. A method of processing images according to any of the claims 1 to 4, wherein a certain significance is given to each border line; and
the border lines are classified according to their significance to integrate the information on the border lines having less than a predetermined significance.

6. A method of processing images according to claim 4, wherein adjacent regions having colors which differ by less than a predetermined value are integrated in advance of the coding.

7. A method of processing images according to claim 6, wherein the colors of the adjacent regions are averaged colors which are a result of averaging the colors of the respective regions.

8. Method of processing images according to claim 6, wherein the colors of the adjacent regions are defined by colors of points in the vicinity of the border lines between said regions.

9. Method of processing images according to any of the claims 6 to 8, wherein, when two regions are integrated, the border lines capable of being integrated are integrated into a single border line.

10. An image processing apparatus for coding images containing regions (A-G) which are associated with respective attributes, comprising:
means (202) for inputting an image;
means (204) for scanning the image in a given direction;
means (206) for detecting, on the lines of scanning, a plurality of border points between regions by the change of the attribute associated with the respective regions;
means (208) for generating a plurality of border lines (BL1, BL2) by putting together substantially adjacent-border points so that the information on the image regions is coded according to the border lines,
**characterized by**
a border line being represented by coordinates of border points constituting the border line and two numbers which represent the attributes on both ides of the border and can vary along the border line, and by further comprising means for deriving border line segment (BL1, BL2, ...) definition data along each of which segment the two attributes remain the same and
means (206) for coding an image based on said regions (A-G) exclusively using the generated borderline segment data (BL1, BL2).

## Patentansprüche

1. Verfahren zum Kodieren eines Bildes basierend auf Bildbereichen (A-G), wobei jedem Bereich eine Eigenschaft des entsprechenden Bildbereiches (A-G) zugeordnet ist, mit den Schritten:
Abtasten des Bildes in einer gegebenen Richtung;
Detektieren einer Anzahl von denjenigen Punkten, vor oder nach welchen sich die Eigenschaft ändert, an den Abtastzeilen, wobei diese Punkte Grenzpunkte zwischen den Bereichen (A-G) definieren; und
Bestimmen von Grenzlinien durch Verbinden im wesentlichen benachbarter Grenzpunkte, so dass die Bereiche (A-G) entsprechend den Grenzlinien kodiert sind, **gekennzeichnet durch**:
eine Grenzlinie, die **durch** Koordinaten der Grenzpunkte, welche die Grenzlinie bilden, und zwei Zahlen repräsentiert ist, die die Eigenschaften an beiden Seiten der Grenze repräsentieren und die entlang der Grenzlinie variieren können, Ableiten der Grenzliniensegment-(BL1, BL2, ....)-Definitionsdaten entlang jedes Segmentes, bei dem die zwei Eigenschaften die gleichen bleiben, und
Kodieren eines Bildes basierend auf diesen Bereichen (A-G) unter ausschließlicher Verwendung der abgeleiteten Grenzliniensegmentdaten.

2. Verfahren nach Anspruch 1, wobei jedem der Grenzpunkte eine gewisse Signifikanz verliehen ist; und
die Grenzpunkte gemäß ihrer Signifikanz klassifiziert sind, so dass die Grenzlinien durch eine Anzahl von Grenzpunkten repräsentiert sind, die eine vorbestimmte Signifikanz haben, um die Information bezüglich der Grenzlinien zu komprimieren.

3. Verfahren zum Verarbeiten von Bildern gemäß der Ansprüche 1 und 2, wobei die Eigenschaft eine Farbinformation ist, so dass die Grenzlinien durch eine Anzahl von Punkten definiert sind, an welchen die Farbinformation variiert.

4. Verfahren zur Bearbeitung von Bildern nach Anspruch 3, wobei die Information an den Grenzlinien aufweist:
Positionsinformation bezüglich der Grenzlinien; und
Farbinformation der Bereiche, die an den beiden Seiten dieser Grenzlinien liegen.

5. Verfahren zum Bearbeiten von Bildern nach einem der Ansprüche 1 bis 4, wobei jeder Grenzlinie eine gewisse Signifikanz verliehen ist; und
die Grenzlinien gemäß ihrer Signifikanz klassifiziert sind, um die Information an den Grenzlinien, welche unter einer vorbestimmten Signifikanz liegen, zu integrieren.

6. Verfahren zum Bearbeitung von Bildern gemäß Anspruch 4, wobei benachbarte Bereiche, welche Farben haben, die sich um weniger als einen vorbestimmten Wert unterscheiden, vor der Kodierung integriert werden.

7. Verfahren zum Bearbeiten von Bildern nach Anspruch 6, wobei die Farben der benachbarten Bereiche gemittelte Farben sind, die ein Ergebnis der Mittelwertbildung der Farben der jeweiligen Bereiche sind.

8. Verfahren zum Bearbeiten von Bildern gemäß Anspruch 6, wobei die Farben der benachbarten Bereiche durch Farben von Punkten in der Nähe der Grenzlinien zwischen den Bereichen definiert sind.

9. Verfahren zum Bearbeiten von Bildern gemäß einem der Ansprüche 6 bis 8, wobei, wenn zwei Bereiche integriert sind, die Grenzlinien welche integriert werden können, zu einer einzigen Grenzlinie integriert werden.

10. Bildverarbeitungsgerät zum Kodieren von Bildern, die Bereiche (A-G) enthalten, welchen jeweilige Eigenschaften zugeordnet sind, mit:
einer Einrichtung (202) zum Eingeben eines Bildes;
einer Einrichtung (204) zum Abtasten des Bildes in einer gegebenen Richtung;
einer Einrichtung (206) zum Detektieren einer Anzahl von Grenzpunkten zwischen Bereichen an den Abtastzeilen mittels der Änderung der Eigenschaft, die den jeweiligen Bereichen zugeordnet ist;
eine Einrichtung (208) zum Erzeugen einer Anzahl von Grenzlinien BL1, BL2 durch Verbinden im wesentlichen benachbarter Grenzpunkte, so dass die Information bezüglich der Bildbereiche gemäß der Grenzlinien kodiert ist,
**gekennzeichnet durch**
eine Grenzlinie, die **durch** Koordinaten der Grenzpunkte, welche die Grenzlinie bilden, und zwei Zahlen repräsentiert ist, die die Eigenschaften an den beiden Seiten der Grenze repräsentieren und die entlang der Grenzlinie variieren können, und weiterhin mit einer Einrichtung zum Ableiten der Grenzliniensegment-(BL1, BL2...),-Definitions-daten entlang jedes Segmentes, bei dem die zwei Eigenschaften die gleichen bleiben, und
eine Einrichtung (206) zum Kodieren eines Bildes basierend auf diesen Bereichen (A-G) unter ausschließlicher Verwendung der erzeugten Grenzliniensegmentdaten (BL1, BL2).

## Revendications

1. Procédé de codage d'une image basé sur des zones d'image (A à G), chaque zone étant associée à un attribut de la zone respective à (A à G), comprenant les étapes de :
balayage de l'image dans une direction donnée ;
détection, sur des lignes de balayage, d'une pluralité de points pour lesquels l'attribut change avant ou après, ces points définissant des points de limite entre des zones (A à G) ; et
définition de lignes de limite en regroupant des points de limite sensiblement adjacents, de telle sorte que les zones (A à G) soient codées en fonction des lignes de limite, **caractérisé par** :
une ligne de limite étant représentée par des. coordonnées de points de limite constituant la ligne de limite et deux nombres qui représentent les attributs des deux côtés de la limite et qui peuvent varier le long de la ligne de limité, la déduction de données de définition de segment de ligne de limite (BL1, BL2, ...) le long de chaque segment sur lequel les deux attributs restent identiques, et
le codage d'une image sur la base desdites zones (A à G) en utilisant exclusivement les données de segment de ligne de limite déduites.

2. Procédé selon la revendication 1, dans lequel une certaine importance est donnée à chacun des points de limite ; et
les points de limite sont classés en fonction de leur importance de telle sorte que les lignes de limite sont représentées par une pluralité de points de limite présentant une importance prédéterminée afin de compresser les informations se rapportant aux lignes de limite.

3. Procédé de traitement d'images selon les revendications 1 et 2, dans lequel l'attribut est une information de couleur de telle sorte que les lignes de limite sont définies par une pluralité de points pour lesquels l'information de couleur varie.

4. Procédé de traitement d'images selon la revendication 3, dans lequel l'information sur les lignes de limite comprend:
une information de position se rapportant aux lignes de limite ; et
une information de couleur de zones situées des deux côtés desdites lignes de limite.

5. Procédé de traitement d'images selon l'une quelconque des revendications 1 à 4, dans lequel une certaine importance est donnée à chaque ligne de limite ; et
les lignes de limite sont classées en fonction de leur importance afin d'intégrer les informations sur les lignes de limite présentant moins qu'une importance prédéterminée.

6. Procédé de traitement d'images selon la revendication 4, dans lequel des zones adjacentes présentant des couleurs qui diffèrent de moins qu'une valeur prédéterminée sont intégrées préalablement au codage.

7. Procédé de traitement d'images selon la revendication 6, dans lequel les couleurs des zones adjacentes sont des couleurs moyennes qui sont un résultat d'un calcul de moyenne des couleurs des zones respectives.

8. Procédé de traitement d'images selon la revendication 6, dans lequel les couleurs des zones adjacentes sont définies par des couleurs de points à proximité des lignes de limite entre lesdites zones.

9. Procédé de traitement d'images selon l'une quelconque des revendications 6 à 8, dans lequel, lorsque deux zones sont intégrées, les lignes de limite pouvant être intégrées sont intégrées en une seule ligne de limite.

10. Dispositif de traitement d'images destiné à coder des images contenant des zones à (A à G) qui sont associées à des attributs respectifs, comprenant:
un moyen (202) destiné à introduire une image ;
un moyen (204) destiné à balayer l'image dans une direction donnée ;
un moyen (206) destiné à détecter, sur lès lignes de balayage, une pluralité de points de limite entre des zones en fonction de la modification de l'attribut associé aux zones respectives ;
un moyen (208) destiné à produire une pluralité de lignes de limite (BL1, BL2) en regroupant des points de limite sensiblement adjacents de telle sorte que les informations sur les zones d'image soient codées en fonction des lignes de limite,
**caractérisé par**,
une ligne de limite étant représentée par des coordonnées de points de limite constituant la ligne de limite et deux nombres qui représentent les attributs des deux côtés de la limite et peuvent varier le long de la ligne de limite, le fait qu'il comporte, en outre, un moyen destiné à déduire des données de définition de segment de ligne de limite (BL1, BL2, ...) le long de chaque segment sur lequel les deux attributs restent identiques, et
un moyen (206) destiné à coder une image sur la base desdites zones (A à G) en utilisant exclusivement les données de segment de ligne de limite (BL1, BL2) produites.
